(19) Europäisches Patentamt
European Patent Office
Office européen des brevets

(11) Numéro de publication : **0 382 586 B1**

(12) **FASCICULE DE BREVET EUROPEEN**

(45) Date de publication du fascicule du brevet : **30.03.94 Bulletin 94/13**

(51) Int. Cl.[5] : **F28D 20/00,** F25B 17/08

(21) Numéro de dépôt : **90400064.3**

(22) Date de dépôt : **09.01.90**

(54) **Dispositif pour la production du froid et/ou de la chaleur par réaction solide-gaz.**

(30) Priorité : **11.01.89 FR 8900268**

(43) Date de publication de la demande : **16.08.90 Bulletin 90/33**

(45) Mention de la délivrance du brevet : **30.03.94 Bulletin 94/13**

(84) Etats contractants désignés : **AT BE CH DE ES GB IT LI LU NL SE**

(56) Documents cités :
**EP-A- 0 042 160**
**EP-A- 0 343 650**
**WO-A-88/02089**
**WO-A-88/09466**
**DE-A- 2 808 464**
**US-A- 2 068 891**
**US-A- 4 365 475**

(73) Titulaire : **SOCIETE NATIONALE ELF AQUITAINE**
**Tour Elf, 2, Place de la Coupole, La Défense 6**
**F-92400 Courbevoie (FR)**

(72) Inventeur : **Lebrun, Michel**
**2, rue des Sureaux**
**F-66000 Perpignan (FR)**
Inventeur : **Mayslich, Michel**
**25, avenue de l'Europe**
**F-92310 Sevres (FR)**
Inventeur : **Spinner, Bernard**
**11, boulevard Kennedy**
**F-66000 Perpignan (FR)**

(74) Mandataire : **Timoney, Ian Charles Craig**
**SOCIETE NATIONALE ELF AQUITAINE**
**Departement Propriété Industrielle Tour Elf**
**Cedex 45**
**F-92078 Paris La Défense (FR)**

**EP 0 382 586 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un dispositif pour produire du froid et/ou de la chaleur par réaction solide-gaz tel que défini dans le préambule de la revendication 1, et connu, par example, du document DE-A-28 08 464.

Le dispositif visé par l'invention est basé sur l'utilisation du système dit "pompe thermochimique", dont les caractéristiques principales sont les suivantes :

- on utilise pour le fonctionnement du système lui-même, l'énergie thermique ; l'énergie électrique n'est éventuellement utilisée que pour la circulation des fluides caloporteurs,
- on utilise, comme "moteur chimique" une réaction renversable entre un solide et un gaz du type :

```
                        1
<Solide A> + (G) ----->     <solide B>
                 <-----
                        2
```

La réaction est exothermique dans le sens 1, ce qui veut dire que dans ce sens elle produit de la chaleur et endothermique dans le sens 2, c'est-à-dire que dans ce sens elle produit du froid.

Un tel système permet le stockage d'énergie sous forme chimique et présente des domaines d'application variés.

De plus, un tel système permet la production, à partir d'une source de chaleur à la température Ts, de chaleur à la température Tu telle que :

$$Tu < Ts$$

Dans ce cas, le système est appelé "pompe à chaleur chimique".

Un tel système permet également la production, à partir d'une source de chaleur à la température T's, de chaleur à la température T'u telle que :

$$T'u > T's$$

Dans ce cas, le système est appelé "thermo transformateur chimique".

Grâce à ce système, il est possible de produire de l'énergie frigorifique à partir d'une source de chaleur et de produire simultanément, à partir d'une source de chaleur à la température T"s, de la chaleur à la température T"u (T"u < T"s) et de l'énergie frigorifique.

Suivant les cas, l'utilisation de la chaleur ou du froid produit est simultanée à la consommation d'énergie à haute température (Ts, T's, T"s) ou différée dans le temps (effet de stockage).

On connaît du document FR-A- 2 615 601 un dispositif pour produire du froid et/ou de la chaleur de manière continue qui comprend deux réacteurs contenant le même composé solide, un condenseur et un évaporateur.

Malgré ses avantages, ce dispositif est d'une efficacité limitée.

Le document US-A-4,365,475 décrit un appareil dans lequel, lors d'une réaction chimique entre deux sels différents et de l'ammoniac, le passage du gaz entre les chambres contenant les sels entraîne en rotation une turbine.

Le document DE-A-28 08 464 décrit un dispositif pour produire du froid et/ou de la chaleur par réaction solide-gaz comprenant un premier et un deuxième réacteurs qui contiennent chacun un sel susceptible de réagir par absorption avec un gaz selon une réaction exothermique, le premier réacteur étant en communication dans une première phase opératoire avec une enceinte destinée à retenir le gaz, le deuxième réacteur étant en communication, dans la première phase opératoire avec une enceinte destinée à libérer le gaz, chaque réacteur comprenant un sel différent.

Ce dispositif est également d'une efficacité limitée.

La présente invention a donc pour but de fournir un dispositif pour produire du froid et/ou de la chaleur qui est d'une efficacité améliorée.

L'invention vise un dispositif pour produire du froid et/ou de la chaleur par réaction chimique solide-gaz comprenant un premier et un deuxième réacteurs qui contiennent chacun un sel susceptible de réagir par réaction chimique avec un gaz selon une réaction exothermique, le premier réacteur étant en communication dans une première phase opératoire avec une enceinte destinée à retenir le gaz, le deuxième réacteur étant en communication dans la première phase opératoire avec une enceinte destinée à libérer le gaz, chaque réacteur comprenant un sel différent d'un réacteur à l'autre, le dispositif comprenant de plus un dispositif de transfert de chaleur susceptible de transférer de la chaleur entre le premier et le deuxième réacteurs pendant la deuxième phase opératoire, caractérisé en ce que l'enceinte destinée à retenir le gaz et l'enceinte destinée à libérer le gaz comprennent respectivement un troisième et un quatrième réacteurs contenant chacun un même troisième sel susceptible de réagir avec le gaz.

Les avantages, ainsi que le fonctionnement de la présente invention apparaîtront plus clairement à la lecture de la description suivante faite d'une manière non limitative en référence aux dessins annexés sur lesquels :

- la figure 1 est un diagramme de Clapeyron pour un dispositif décrit à titre explicatif ;
- les figures 2A et 2B sont chacune une vue schématique d'une installation selon la figure 1 ;
- les figures 3A et 3 B sont chacune une vue schématique d'une installation selon l'invention comportant quatre réacteurs ;
- la figure 4 est une vue schématique d'une installation complète correspondant aux figures 3A et 3B ;
- la figure 5 est un diagramme de Clapeyron pour le dispositif des figures 3A, 3B et 4 ; et
- la figure 6 est un diagramme de Clapeyron pour un autre mode de réalisation comportant quatre réacteurs.

Le fonctionnement des dispositifs selon l'invention est fondé sur la réaction entre un sel et un gaz. Comme il s'agit d'une véritable réaction chimique on a un système monovariant à l'équilibre, c'est-à-dire qu'il existe une relation univoque entre la température et la pression de la forme $\log P = A - B/T$, expression dans laquelle P est la pression, T la température en °K et A et B sont des constantes caractéristiques du couple sel/gaz utilisé.

Dans la description suivante, les phases de fonctionnement seront représentées dans un diagramme de Clapeyron tel qu'indiqué sur la figure 1 qui comporte des droites d'équilibre des sels utilisés.

Sur la figure 2A est représenté un dispositif, pour produire du froid par réaction solide-gaz décrit à titre explicatif pour la compréhension de l'invention. Le dispositif comprend un premier et un deuxième réacteurs chimiques 10, 12, un condensateur 14 et un évaporateur 16. Chaque réacteur chimique 10, 12 est formé d'une enceinte par exemple métallique dans laquelle est disposée une quantité de sel.

Dans l'exemple illustré, le réacteur 10 contient du $NiCl_2$, qui à l'origine se présente sous la forme d'un complexe avec de l'ammoniac et le réacteur 12 du $CaCl_2$. Le condenseur 14 et l'évaporateur 16 sont de construction classique et sont agencés de façon à pouvoir échanger de la chaleur avec leur environnement.

Comme représenté sur la figure 2A, la première phase opératoire consiste à chauffer le premier réacteur chimique 10 jusqu'à une température de 280°C, par exemple en faisant circuler de la vapeur d'eau surchauffée dans un échangeur de chaleur (non représenté) disposé à l'intérieur de ce réacteur. Le sel, originellement riche en ammoniac, libère cet ammoniac qui passe par un conduit 18 vers le condensateur 14. La condensation de l'ammoniac libère de la chaleur à une température de 40°C qui est récupérée par de l'eau introduite dans le condenseur à température ambiante qui dans l'exemple illustré est 30 à 35°C. L'ammoniac à l'état liquide passe ensuite par un conduit 20 dans l'évaporateur 16 où il s'évapore en absorbant de la chaleur et créant ainsi du froid à une température de -25°C. La vapeur d'ammoniac passe enfin par un conduit 22 vers le deuxième réacteur 12 où elle est absorbée par le sel $CaCl_2$ à une température inférieure à 52°C.

Comme schématisé sur la figure 2B, les deux réacteurs 10, 12 sont reliés par un dispositif de transfert de chaleur 24. Ce dispositif peut comprendre un échangeur de chaleur ou système caloporteur dans lequel circule un liquide caloporteur. Cependant, le dispositif de transfert de chaleur 24 peut comprendre un caloduc 24, par exemple celui décrit dans la demande de brevet français n° 88 04165.

Dans une deuxième phase opératoire, représentée sur la figure 2B, le réacteur 10 est relié à l'évaporateur 16 par un conduit 26 et le réacteur 12 est relié au condenseur 14 par un conduit 28. En même temps, le système caloporteur 24 entre les deux réacteurs 10, 12 est mis en opération. Le sel dans le réacteur 10, qui est pauvre en ammoniac, absorbe de l'ammoniac et passe à une température inférieure à 180°C. La chaleur d'absorption du $NiCl_2$ est transférée par le système caloporteur 24 au $CaCl_2$ dans le réacteur 12 et sert de source de chaleur de désorption du $CaCl_2$ qui, à la fin de la première phase se trouve riche en ammoniac.

Le sel dans le réacteur 12 désorbe de l'ammoniac qui passe d'abord au condenseur 14 et ensuite à l'évaporateur 16 comme dans la première phase. Le choix des sels utilisés dans les réacteurs 10 et 12 et l'utilisation du dispositif de transfert de chaleur 24 entre les réacteurs permet de créer du froid à une température de -25°C, dans l'exemple donné de façon continue. Il s'ensuit qu'à la fin de la deuxième phase les réacteurs 10 et 12 seront reconnectés selon le circuit de la figure 2A.

Les sels utilisés sont tels qu'il existe un écart entre la température d'absorption du sel dans le réacteur 10 et la température de désorption du sel dans le réacteur 12. Comme présenté sur la figure 1, il y a un écart T entre la température d'absorption du $NiCl_2$, qui se trouve entre 160°C et 180°C, et la température de désorption du $CaCl_2$, qui se trouve entre 108°C et 128°C. L'écart T a donc une valeur minimale de 32°C, valeur qui assure un transfert de chaleur efficace par le système caloporteur 24. De façon connue, pour qu'un échangeur de chaleur puisse transférer de la chaleur entre deux points d'une manière efficace, il faut qu'il y ait une différence de température d'au noins 5°C entre ces points.

La performance d'un dispositif pour produire du froid et/ou de la chaleur par réaction solide-gaz peut être évaluée en utilisant la notion économique du coefficient de performance ou COP.

Pour un dispositif destiné à produire du froid comme celui représenté sur la figure 3, le COP est défini par la relation :

$$COP = \frac{H_e + H_e}{H_R + \rho C_p \Delta T}$$

expression dans laquelle $H_e$ est la chaleur de libération du gaz, $\Delta H_R$ est la chaleur de réaction de désorption du gaz du sel et $\rho C_p \Delta T$ est la chaleur sensible à fournir au réacteur et au sel entre les deux niveaux de température correspondant à la réaction d'absorption et la réaction de désorption.

Sur les figures 3 et 4 , est représentée une installation selon l'invention qui comprend quatre réacteurs qui contiennent trois sels différents.

Le dispositif représenté sur la figure 3A est destiné à produire de l'air frais à 5°C par réaction solide-gaz et comprend quatre réacteurs 32, 34, 36 et 38 de construction analogue à ceux de la figure 2 mais n'utilise ni condenseur ni évaporateur. Dans l'exemple illustré, les réacteurs 32 et 36 contiennent du $BaCl_2$, le réacteur 34 contient du $NiCl_2$ et le réacteur 38 du CaCl2. A l'origine, les sels dans les réacteurs 34 et 36 se présentent sous la forme d'un complexe avec de l'ammoniac.

Dans une première phase opératoire, le réacteur 34 est chauffé à une température de 270°C. Le sel, originellement riche en ammoniac, libère cet ammoniac qui passe par un conduit 40 vers le réacteur 32 où il est absorbé par le $BaCl_2$ libérant de la chaleur à une température de 40°C qui est récupérée par l'air ambiant. Egalement dans la première phase, l'ammoniac contenu dans le réacteur 36 est désorbé et passe par un conduit 42 vers le réacteur 38 où il est absorbé par le $CaCl_2$. La désorption de l'ammoniac crée du froid dans le réacteur 36 à -10°C et l'absorption de l'ammoniac par le $CaCl_2$ libère de la chaleur à 40°C qui est évacué par l'air ambiant.

Dans une deuxième phase opératoire représentée sur la figure 3B, le réacteur 38 est relié au réacteur 36 par le conduit 42 et le réacteur 32 est relié au réacteur 34 par le conduit 40. En même temps, le système caloporteur 48 entre les réacteurs 34 et 38 est mis en opération. Le sel dans le réacteur 34, qui est pauvre en ammoniac, absorbe de l'ammoniac en provenance du réacteur 32 et passe à une température d'environ 150°C. La chaleur d'absorption du $NiCl_2$ est transférée par le système caloporteur 48 au $CaCl_2$ dans le réacteur 38 et sert de source de chaleur de désorption du $CaCl_2$ qui, à la fin de la première phase, se trouve riche en ammoniac. Le sel dans le réacteur 38 désorbe de l'ammoniac qui passe par le conduit 44 au réacteur 36 où il est absorbé par le $BaCl_2$ libérant de la chaleur à 40°C vers l'air ambiant. La désorption de l'ammoniac par le $BaCl_2$ dans le réacteur 32 crée du froid à -10°C.

Un circuit complet permettant le fonctionnement continu du dispositif est représenté sur la figure 4. Les conduits 40, 42 ainsi que le système caloporteur 48 sont munis chacun d'une vanne respective 50 permettant le passage de la première à la deuxième phases et vice versa.

Dans l'exemple représenté sur la figure 5 , exemple 1, le

$$COP = \frac{1 + 1}{1 + 0.1} \simeq 1.9$$

<u>Exemple 2 - Figure 6</u>

Un deuxième exemple d'une installation utilisant quatre réacteurs munis de trois sels différents est représenté sur la figure 6 . L'installation et son fonctionnement correspondent à ceux du dispositif de la figure 4. Dans cet exemple, l'installation est destinée à produire de l'air frais à 10°C pour la climatisation et de la chaleur à 50°C. Les réacteurs 32 et 36 contiennent du $BaCl_2$, le réacteur 34 contient du $NiCl_2$ et le réacteur 38 du $MnCl_2$. L'installation utilise de la chaleur à 240°C et libère de la chaleur dans l'air ambiant à 40°C. Comme pour l'exemple précédent, la chaleur d'adsorption du $NiCl_2$ passe par le système caloporteur et est utilisée comme chaleur de désorption du $MnCl_2$ dans le réacteur 38.

Pour cette installation, on peut calculer deux coefficients de performance :

$$COP\ Froid = \frac{2}{1 + 0.1} \simeq 1.9$$

$$COP\ Chaud = \frac{1}{1 + 0.1} \simeq 0.9$$

Il est à noter que la chaleur produite à 50°C n'est récupérable que durant la moitié du cycle, tandis que le froid est produit en continu. Dans cet exemple, le T à travers le système caloporteur 48 est de l'ordre de 15°C qui est relativement faible. Cependant l'utilisation d'un tel dispositif est intéressante si l'installation comporte un dispositif de stockage de chaleur.

On peut également envisager, pour la mise en oeuvre du dispositif selon l'invention, d'utiliser des sels choisis à partir de la liste suivante :

| | |
|---|---|
| $ZnSO_4$ | $ZnCl_2$ |
| $CaCl_2$ | NaCl |
| $SrCl_2$ | NaBr |

Ainsi, pour une installation donnée, l'invention permet d'avoir une efficacité améliorée.

## Revendications

1. Dispositif pour produire du froid et/ou de la chaleur par réaction chimique solide-gaz comprenant un premier (34) et un deuxième (38) réacteurs qui contiennent chacun un sel susceptible de réagir par réaction chimique avec un gaz selon une réaction exothermique, le premier réacteur (34) étant en communication dans une première phase opératoire avec une enceinte (32) destinée à retenir le gaz, le deuxième réacteur étant en communication, dans la première phase opératoire avec une enceinte (36) destinée à libérer le gaz, chaque réacteur comprenant un sel différent d'un réacteur à l'autre, le dispositif comprenant de plus un dispositif de transfert de chaleur (48) susceptible de transférer de la chaleur entre le premier et le deuxième réacteurs (34, 38) pendant la deuxième phase opératoire, caractérisé en ce que l'enceinte (32) destinée à retenir le gaz et l'enceinte (36) destinée à libérer le gaz comprennent respectivement un troisième (32) et un quatrième (34) réacteurs contenant chacun un même troisième sel susceptible de réagir avec le gaz.

2. Dispositif selon la revendication 1 caractérisé en ce que le premier réacteur (34) contient du $NiCl_2$ et le deuxième réacteur (38) contient du $CaCl_2$, le gaz étant l'ammoniac.

3. Dispositif selon la revendication 1 ou 2 caractérisé en ce que le troisième (32) et le quatrième (34) réacteurs contiennent du $BaCl_2$.

## Patentansprüche

1. Vorrichtung zur Erzeugung von Kälte und/oder Wärme durch chemische Feststoff-Gas-Reaktion mit einem ersten (34) und einem zweiten (38) Reaktor, die jeder ein Salz enthalten, das imstande ist, durch chemische Reaktion mit einem Gas gemäß einer exothermen Reaktion zu reagieren, wobei der erste Reaktor (34) in einer ersten Betriebsphase mit einem Raum (32) in Verbindung steht, der dazu bestimmt ist, das Gas zurückzuhalten, der zweite Reaktor in der ersten Betriebsphase mit einem Raum (36) in Verbindung steht, der dazu bestimmt ist, das Gas freizusetzen, jeder Reaktor ein von einem Reaktor zum anderen unterschiedliches Salz aufweist, wobei die Vorrichtung darüber hinaus eine Einrichtung zur Wärmeübertragung (48) aufweist, die imstande ist, während der zweiten Betriebsphase Wärme zwischen dem ersten (34) und dem zweiten (38) Reaktor zu übertragen, dadurch gekennzeichnet, daß der zum Zurückhalten des Gases bestimmte Raum (32) und der zur Freigabe des Gases bestimmte Raum (36) jeweils einen dritten (32) und einen vierten (34) Reaktor aufweisen, von denen jeder ein gleiches drittes Salz enthält, welches imstande ist, mit dem Gas zu reagieren.

2. Vorrichtung nach Anspruch 1, dadurch gekennzeichnet, daß der erste Reaktor (34) $NiCl_2$ und der zweite Reaktor (38) $CaCl_2$ enthalten, wobei das Gas Ammoniak ist.

3. Vorrichtung nach Anspruch 1 oder 2, dadurch gekennzeichnet, daß der dritte (32) und der vierte (34) Reaktor $BaCl_2$ enthalten.

## Claims

1. Device for bringing about cooling and/or heating by solid-gas chemical reaction, comprising first (34) and second (38) reactors, each of which contains a salt which can react by chemical reaction with a gas according to an exothermic reaction, the first reactor (34) being in communication, in a first operative stage, with a chamber (32) for holding the gas, the second reactor being in communication, in the first operative stage, with a chamber (36) for discharging the gas, each reactor including a different salt, the device also comprising a heat-transfer device (48) which can transfer heat between the first and second reactors (34, 38) during the second operative stage, characterized in that the chamber (32) for holding the gas and

the chamber (36) for discharging the gas comprise a third (32) and a fourth (34) reactor, respectively, each containing the same, third salt which can react with the gas.

**2.** Device according to Claim 1, characterized in that the first reactor (34) contains $NiCl_2$ and the second reactor (38) contains $CaCl_2$, the gas being ammonia.

**3.** Device according to Claim 1 or Claim 2, characterized in that the third (32) and fourth (34) reactors contain $BaCl_2$.

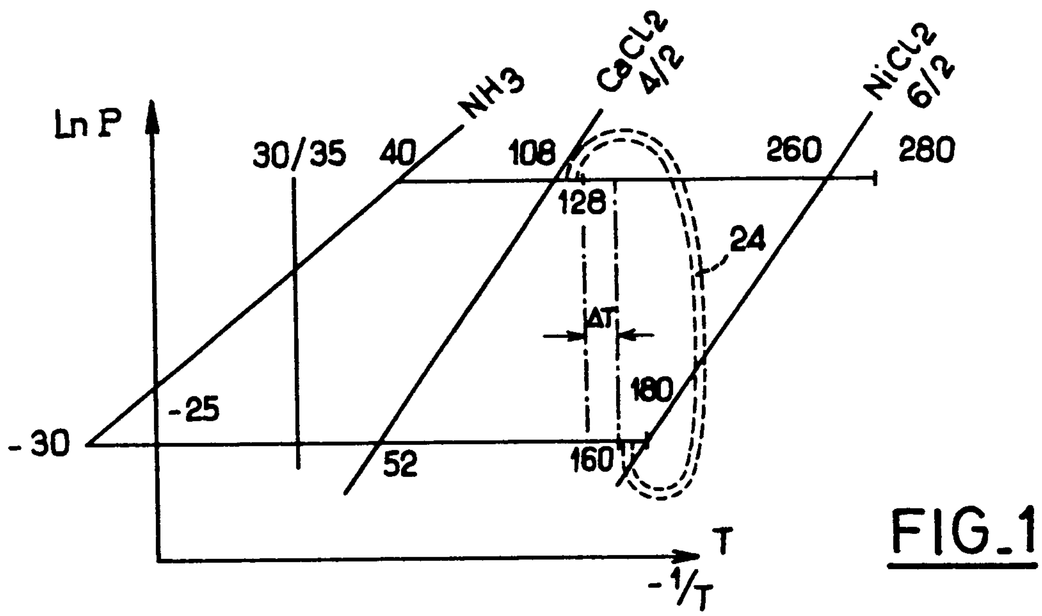


FIG_1

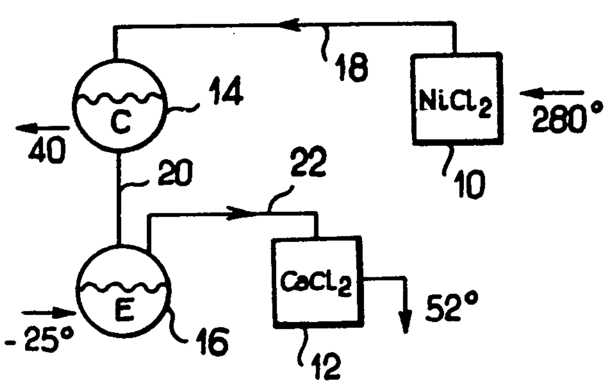


FIG_2A

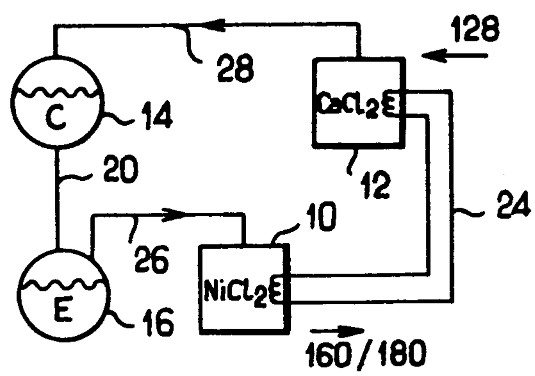


FIG_2B

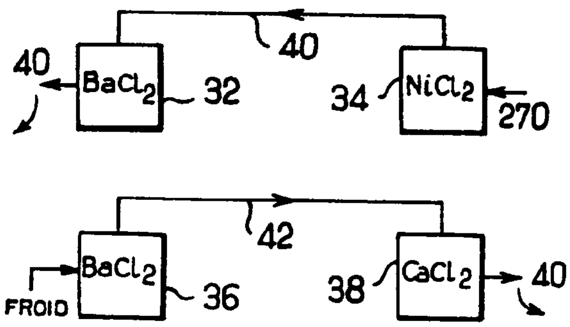


FIG_3A

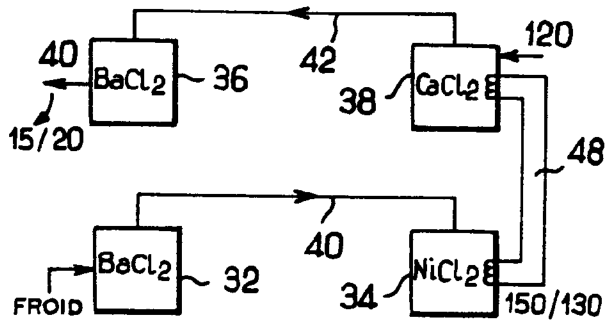


FIG_3B

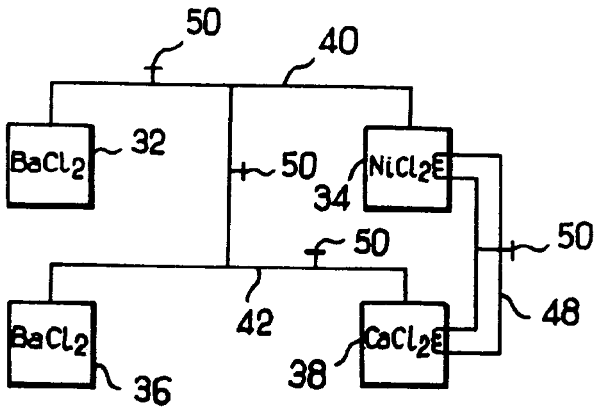


FIG_4

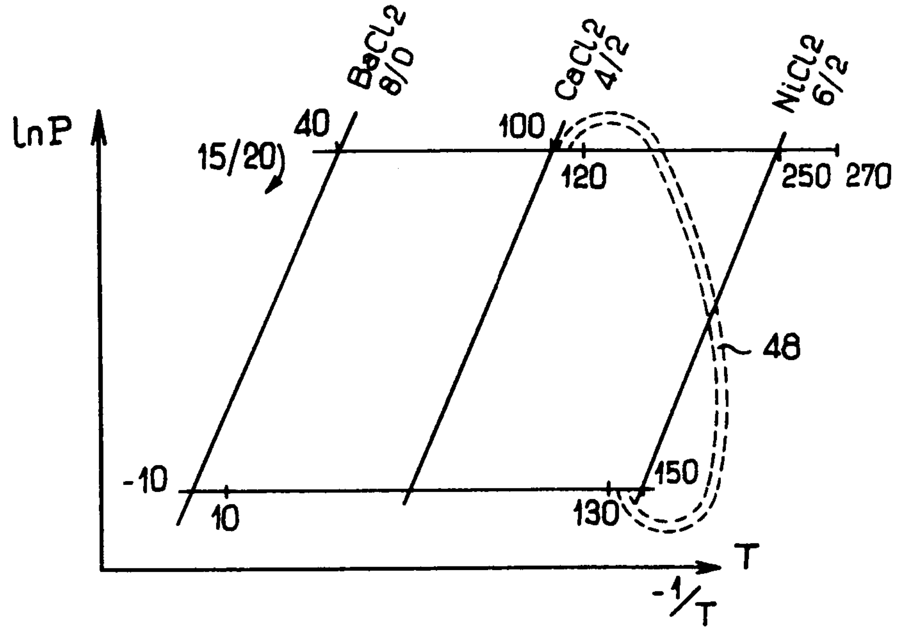
BaCl2
8/0
CaCl2
4/2
NiCl2
6/2
lnP
40
100
15/20
120
250 270
48
-10
150
10
130
T
-1/T

FIG_5

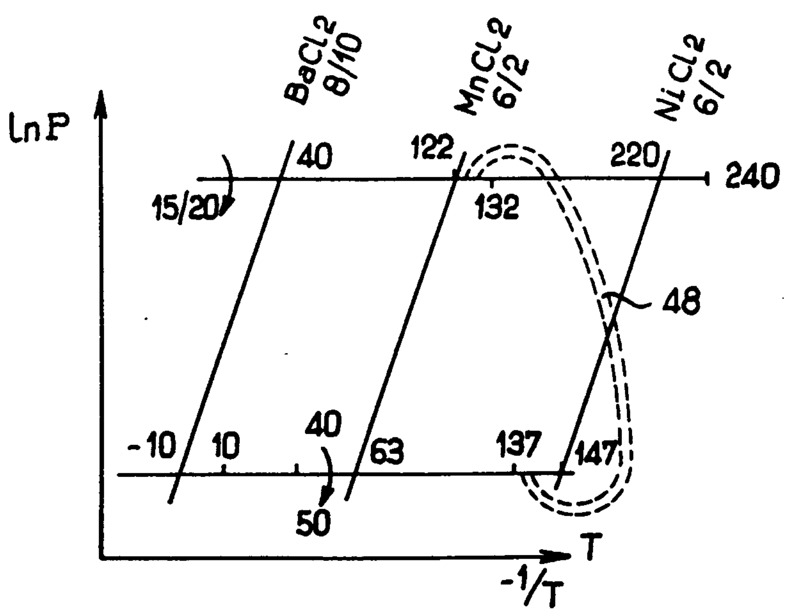
BaCl2
8/10
MnCl2
6/2
NiCl2
6/2
lnP
40
122
220
240
15/20
132
48
-10
10
40
63
137
147
50
T
-1/T

FIG_6